# EUROPEAN PATENT SPECIFICATION

(11) **EP 3 055 208 B1**
(45) Date of publication and mention of the grant of the patent: **11.12.2019**
(21) Application number: 13895435.9
(22) Date of filing: 08.11.2013
(51) Int. Cl.: B64C 39/02, B64D 5/00, G05D 1/00

(54) **COMBINATION OF UNMANNED AERIAL VEHICLES AND THE METHOD AND SYSTEM TO ENGAGE IN MULTIPLE APPLICATIONS**
KOMBINATION AUS UNBEMANNTEN LUFTFAHRZEUGEN SOWIE VERFAHREN UND SYSTEM ZUM EINSATZ IN MEHREREN ANWENDUNGEN
COMBINAISON DE VÉHICULES AÉRIENS SANS PILOTE, ET PROCÉDÉ ET SYSTÈME POUR ENGAGEMENT DANS DE MULTIPLES APPLICATIONS

(30) Priority: 08.10.2013 CA 2829368
(43) Date of publication of application: 17.08.2016
(73) Proprietor: EQQUERA Inc., West Vancouver BC V7S 1V1 (CA)
(72) Inventor: DE SILVA, Shelton Gamini, West Vancouver, British Colombia V7S 1V1 (CA)
(74) Representative: Weickmann & Weickmann PartmbB
(86) International application number: PCT/CA2013/000941
(87) International publication number: WO 2015/051436

(56) References cited:
- WO-A2-2008/085536
- US-A- 5 000 398
- US-A- 5 000 398
- US-A- 5 521 817
- US-A1- 2009 294 573
- US-A1- 2013 200 207
- US-A1- 2013 200 207
- DE SILVA S G: "Knowledge of the Arctic and Unmanned Aerial Vehicles", 32ND INTERNATIONAL CONFERENCE ON OCEAN, OFFSHORE AND ARCTIC ENGINEERING (OMAE2013) IN NANTES, FRANCE FROM JUNE 9-14, 2013, NEW YORK, NY : ASME, 2013, US , 9 June 2013 (2013-06-09), pages V006T07A026-1, XP008181786, ISBN: 978-0-7918-5540-9 Retrieved from the Internet: URL:http://eqquera.com/presentation%202013 .pdf
- ACKERMAN: 'UAV Concept: Mother Hen and Friendly Chicks' 08 October 2013, pages 1 - 2, XP055292223 Retrieved from the Internet: <URL:http://spectrum.ieee.org/, http://spectrum.ieee.org/automaton/robotics /aerial-robots/uav-concept-mother-hen-and-f rien dly-chicks>
- DE SILVA: 'Knowledge of the Arctic and Unmanned Aerial Vehicles' 14 June 2013, pages 1 - 9, XP008181786 Retrieved from the Internet: <URL:http://eqquera.com/presentation%202013 .pdf>

## Description

### Field of the Invention

This invention relates to a flatbed featured Unmanned Aerial Vehicle carrying multiple sub unmanned aerial vehicles and system.

The Unmanned Aerial Vehicle is hereinafter called "Mother UAV member capable of carrying modules of Sub Unmanned Aerial Vehicle members hereinafter called "Sub UAV" member securely fastened on the flatbed area of the Mother UAV. More particularly, the method and system that is capable of ejecting said Sub UAV members from the Mother UAV member wherein Sub UAV members autonomously fly in sequence in a coordinated manner with the Mother UAV member, and capable of landing in a specified location, also the method and system that the Sub UAV members are able to return back to the Mother UAV member, and be firmly secured on the flatbed of the Mother UAV member. Further, Mother UAV member comprises of a system that the Mother UAV member and Sub UAV members communicate with each other via satellite and remote control technology to send and receive command signals between said UAV members, also to communicate with moveable or un-moveable "Data Station" members for the purpose of operating and activating all electronic and mechanical components for said UAV members to fly and engage in specified missions. The present invention is specifically designed for multifunctional and multipurpose applications for civil, commercial and military purpose.

### Description of the Related Art

In accordance with the prior art, the unmanned aerial vehicles are not new to the industry. There are number of aircrafts that carry unmanned aerial vehicles that have been developed. These unmanned vehicles mostly carry explosives for military purposes, such as the modern torpedoes that have self- propelled weapons with an explosive warhead. The earliest recorded use of an unmanned aerial vehicle dates back to August 22, 1849, when the Austrians attacked the Italian city of Venice with unmanned balloons loaded with explosives. Since that there are number of developments that have occurred. The first pilotless aircraft was built during and after World War 1 controlled by radio control techniques. Today, unmanned aircrafts are becoming beneficial, useful, a cost effective method for civil, commercial and military purposes in the aviation industry. The prospective benefits from Unmanned Aerial Vehicles are incredible, and this technology has the potential to revolutionize the entire world in the future. Small drones are already taking a place in the Arctic sky and other locations to observe wildlife and engage in some research in close proximity to locations where accessible. However, experts, governments and agencies emphasize that this needs to be developed not only for the use for military purpose, including commercial and civil purposes that effectively support operations in the Arctic and other regions where humans are unable to access. Nevertheless, none of these similar manned or unmanned aircrafts are able to perform multiple applications and engage in multiple missions. The present invention is invented substantially departing from prior concepts, design and art, which provides fast access to remote and complex areas where humans and other vehicles are unable to access and engage in multiple missions.

"Knowledge of the Artic and Unmanned Aerial Vehicles"; DE SILVA, S.G., 32nd International Conference on Ocean, Offshore and Arctic Engineering, June 9-14, 2013, discloses an unmanned aerial vehicle comprising a mother and a sub UAV.

US Patent No 4,379,533 Inventors Kennesaw Edward W.Caldwell, and Smethers, Rolllo G, Jr., Atlanta, dated April, 12, 1983, Assignee to Lockheed Corporation, Burbank California, "Transport Airplane" which disclose flatbed of air craft capable of carrying passengers or cargo such as intermodal containers or vehicles.

US Patent No 6,056,237 Inventor Woodland Richard L.K., Victoria BC Canada , dated May, 2, 2000, "SONOTUBE COMPATIBLE UNMANNED AERIAL VEHICLE AND SYSTEM" which disclose UAV and systems comprises an apparatus enabling very small, man portable, ballistically launched, autonomously or semi-autonomously controlled vehicle to be deployed,

US Patent No 6,364,026 Inventor Doshay Irving , California USA dated April, 2, 2002,-ROBOTIC FIRE PROTECTION SYSTEM" which disclose fire fighting system comprising a set of unmanned aircraft and manned control vehicle and fight control station.

Canadian Patent No CA 2721996, Present inventor **De Silva,** Shelton Gamini, British Columbia Canada dated November, 2010 "SATELLITE COMMUNICATION REMOTE CONTROLLED UNMANNED AERIAL VEHICLES"

Which disclose piloted helicopter or aircraft drop unmanned aerial vehicles to combat wildfires.

Document WO 2008/085536 A2 discloses a system for reconnaissance using autonomous unmanned airborne vehicles (UAV). The system comprises a mothership, which is generally a fixed wing fuel tank capable of providing a suitable surface for flight (lift) and one or more elements for attachment of individual UAVs. The system further comprises one or more UAVs that are detachably connected to the mothership, and which are independently controllable for reconnaissance and tracking. The system and its individual parts are reusable and independently controllable, permitting low cost reconnaissance over wide areas of geography.

### Summary of the Invention

The high demand in interests on future economic development in the Arctic entirely depends on a sound environment foundation. Scientists, and researchers recognize that there is a huge gap of knowledge and there is an urgency to close this gap prior to any development in the Arctic region. In addition, there are other major environmental disasters, such as oil spills in the Arctic, disaster assistance, especially for search and rescue, access to disaster areas to deliver food, water and medicine. Nevertheless, to engage in said multiple missions are absolutely challengeable and extremely costly, since each of these missions need specific actions, diverse equipment and human involvement.

The main object of the present invention is to provide an unmanned aerial vehicle, and a method and system for multiple applications by innovating a Mother UAV member which comprises of a combination of supportive modules of Sub UAV members, and operating system that is capable to engage in broad range of missions, specially to engage in the Arctic region to collect (1) scientific data, monitor change of climate, weather pattern, sea-ice melting, (2) measure air quality at high, mid and lower altitude, specially to measure methane and other toxic gases in the Arctic (3) observe wildlife, ecosystem, marine environment, (4) surveillance, patrolling, securing borders, (5) transport goods, pipeline inspection, observe oil spills, and clean up method, (6) Arctic drilling for core ice samples (scientific research), (7) search and rescue. In addition to the above missions the present invention is capable for the use as (8) remote ground data-collecting stations in the Arctic, (9) military missions, (10) combat Arctic oil spills.

This is being solved according to the invention by a system according to claim 1. Preferred embodiments of the invention are described in the dependent claims.

It should be understood that the detailed description, while indicating preferred embodiments of the invention, is given by way of illustration only since various changes and modifications within the scope of the invention will become apparent to those skilled in the art.

### BRIEF DESCRIPTION OF THE DRAWINGS

**Figure 1** is a top view of the Mother UAV member carrying three Sub UAV members on the flatbed.
**Figure 2** is a view of the satellite communication system between the Data Station, Mother UAV member, Sub UAV members, and Moveable Data Stations.
**Figure 3** is a view of the Sub UAV member showing the rotor and hover engines attached to the Sub UAV member.
**Figure 4** is a view of the slightly liftoff of the Sub UAV members from the flatbed member of the Mother UAV member.
**Figure 5** is a view of the Sub UAV landing on the surface and the hover engines are in the upright position for the purpose of moving the Sub UAV from one location to another.
**Figure 6** is a view of the Sub UAV member on melting sea-ice or the ocean and obtains data, from underwater submarines regarding thickness of the ice; melting pattern and sonar ice draft profile data and more.
**Figure 7** is image of Sub UAV member carrying a number of Mini Unmanned Vehicle members that would be deployed in close proximity of wildlife areas, so that these mini vehicles are able to blend with birds, animals or other wildlife.
**Figure 8** is a view of the Mother UAV member 11 on how it controls the Sub UAV members so that the Sub UAV members are able to fly in a sequence and in a coordinated manner alongside the Mother UAV member.

### DETAILED DESCRIPTION

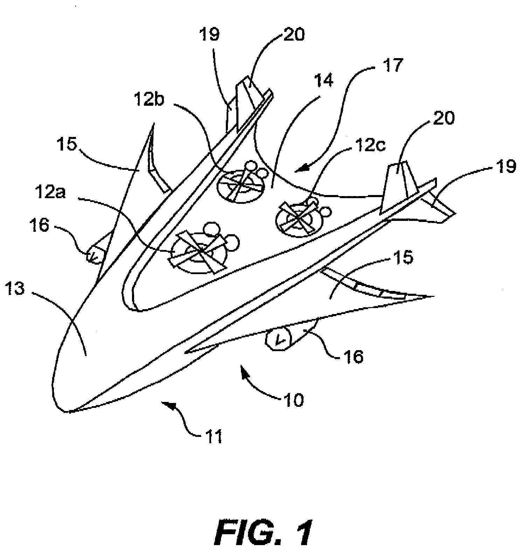

In particular to the drawings **Figures 1-8****,** illustrates the Mother UAV member that carries modules of Sub UAVs generally designed by the reference numerical 10. Reference more particularly to the drawings 10 describes the top view of the Mother Unmanned Aerial Vehicle "Mother UAV" member 11, consists of a high front nose section member 13, and wider back section with flatbed surface member 14, which carries Sub UAV members 12A 12B and 12C. Further, comprises of a method and system that the Mother UAV member 11 is able to eject the Sub UAV member12 in mid air, so that said Sub UAV member 12 is able to operate autonomously and land on a specified area and engage in a specific mission. Further, consists of a system and method that said Sub UAV member 12 is capable to return to the Mother UAV member 11 and land on the flatbed area member 14. In addition, includes wing members 15 on each side of the Mother UAV member 11, mounted with jet engine assemblies member 16 with the Tilt Rotor system, that is capable of hover, take off and landing. This provides a greater flexibility and safety operation method of ejecting and receiving Sub UAV member 12 from and to the flatbed member 14 respectively. It is important to note that the main objective of present innovation is designed for use of multifunction multipurpose missions for various applications, the wings member15, and engine member 16 may be modified and vary in shapes, size and configurations, and placed in different locations of the Mother UAV member 11. For example: for military use, high speed jet engines that will be able to gain high velocity may be mounted on the back of the Mother UAV 11 member etc., such modifications will be achieved only within the sprit and scope of the present invention. As illustrated in **Figure 1****,** the flatbed consists of a narrow front member and wider back section member 17, this is especially designed to create the necessary space to carry various sizes of Sub UAV members 12, and to provide sufficient space to maneuver and eject, and receive and land on the flatbed area member 14 to minimize hazards that pose a threat to any of the Unmanned Arial Vehicle member 11 and member 12. The Mother UAV member 11 further consists of multiple wheels member 18 mounted at the bottom of the Main UAV member 11, also pair of horizontal stabilizes member 19, and vertical stabilizer member 20 extends from end of flatbed 14.

In order to hold the Sub UAV members 12, securely on the flatbed area member 14, further provides a unique mechanical locking system wherein when Sub UAV member 12 is loaded or lands on to the flatbed member14, the Sub UAV member 12 drops into a concave area and locks in firmly with a secure mechanical system. Also when Sub UAVs are ready to be ejected the mechanical locking system to be released safely and securely so that none of the Unmanned Vehicles face a hazard situation. Further, comprises with the system and method that the concave area for the locking system is able, to be adjusted and fitted to carry number of Sub UAV members 12. This will be achieved by mechanically changing the concave area according to size, payload and number of Sub UAV member or members carried on the flatbed member 14. For example: the Mother UAV member 11 needs to carry three Sub UAV members 12, the concave of the flatbed area will adjust to three concave spaces, and when Mother UAV member 11 needs to carry one Sub UAV member 12, the concave area adjusts as one concave area. This system would provide flexibility to carry number of Sub UAV members 12, especially to combat Arctic oil spills and wildfires.

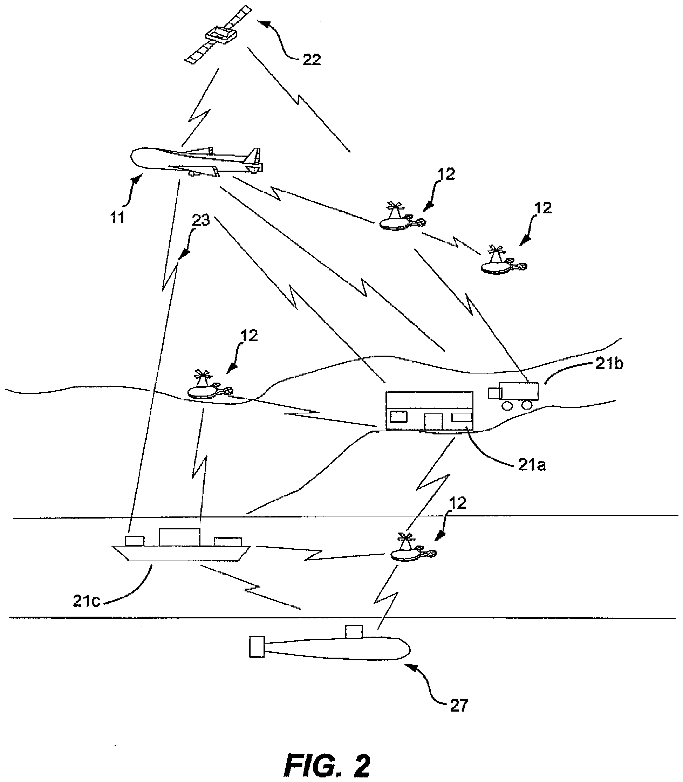

The mechanical locking system will operate based on command signal assemblies received from the satellite communication data station member 21 via satellite 22. As illustrated in **Figure 2****,** when Mother vehicle member 11 receives the command signal assembly 23, the Mother Vehicle member 11 unlocks the mechanical locking system wherein the Sub UAV member 12 is able to lift off from the concave area of the flatbed member 14, and ejects safely and systematically. In the same manner, when Sub UAV member 12 returns to the Mother UAV member 11, the Sub UAV member 12 lands extremely carefully on the flatbed area member 14 and secures firmly.

The module of Sub UAV member 12 is the most important unit of the present innovation. Since these are the vehicles deployed to remote and complex areas to obtain scientific data, combat oil spills, military and other missions. The outer configuration of Sub UAV members 12 maintains similar structure. However, the interior configuration would be changed to accommodate according to a specific application. For example, when a Sub UAV member 12 needs to be deployed to monitor change of climate or sea-ice, the interior of the Sub UAV member 12 is attached with specific cameras, sensors, and other necessary equipment. The Sub UAV members used to combat oil spills, the interior of the vehicle would consist with sufficient space to hold booms or fire retardant substance, when the Sub UAV member 12 is used for Arctic drilling for scientific data the Sub UAV member 12, would be equipped with a mechanical system etc.

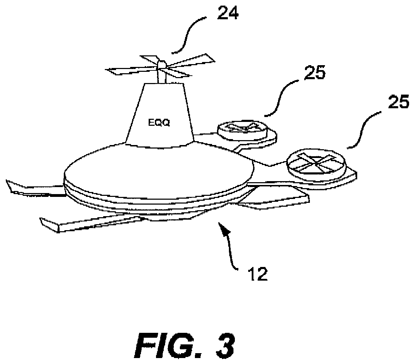

As illustrated in **Figure 3****,** the Sub UAV member 12 operates with a combination of a rotor system similar to the helicopter and hover fan technology wherein Sub UAV member 12 is capable of hover, takeoff and land vertically. The horizontal rotor blade 24 provides vertical lift, and hover fans 25 provides to pull against torque reaction and holds the Sub UAV member 12 straight. It is important to note that hover fans 25 will turn to various angles to provide such pull against torque.

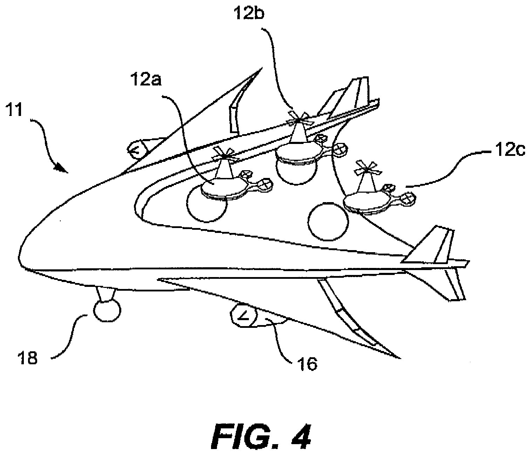

As illustrated in **Figure 4****,** when a Sub UAV member 12, is ready to eject, the hoover engines will start and provide sufficient power to liftoff the Sub UAV member 12 slowly and systematically from the flatbed member 14, maintaining the balance of Mother UAV member 11 so that it wont cause any risk where UAVs would crash. At which time, all electronic locking systems releases the Sub UAV members 12, and once the Sub UAV member 12 is ejected, it lifts off and moves away from the Mother UAV member 11, the horizontal rotor system 24 turns ON and takes over the Sub UAV member 12 operating system, similar to the helicopter. All these changes of operating systems take place in air with extreme balance so that speed of each of horizontal rotor blades 24 and hover fans 25 are able to control Sub UAV member 12 and operate in a safe manner. This combination of operating system will provide Sub UAV members 12 to approach far locations faster and the hover fan operating system to land vertically and maneuver at a high, in mid and low elevation while descending, and collect highly important scientific data such as methane and other toxic releases in the Arctic. This will solve today's priority issue of how to collect scientific data of methane and other toxic gases in the Arctic region where humans and other vehicles are unable to access. This is one of the highest priorities at the moment in the Arctic.

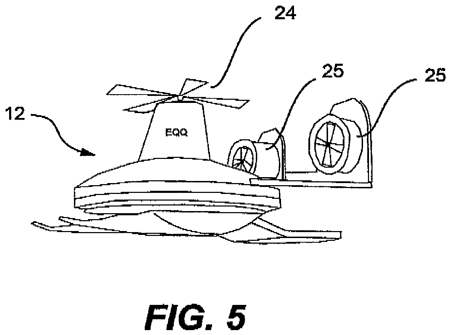

Present innovation comprises of a unique design that allows Sub UAV member 12 to operate in both land and water. As illustrated in Figure 5, once the Sub UAV member 12 lands on the ground or ocean, the hover engine 25 turns upright and provides power to move the Sub UAV member 12 from one location to another as an unmanned hovercraft. This creates capability to find a specific location that needs to be investigated or access to specific areas where aircrafts, boats or humans are unable to access. Further, provides the opportunity to transport samples of scientific information, food, water and medicine to people in disaster areas, also rescue people in the Arctic, combat Arctic oil spills and in the clean up process.

As shown in **Figure 3**, the Sub UAV member 12 consists with special padded interior walls to maintain appropriate temperature to protect instruments and equipment from the cold weather, and keep them in proper working condition. The Sub UAV member 12 is powered by solar, battery power, and fuel similar to the present techniques used in the industry, and specially creates a wind technology, that would turn the hover engine to generate the power. Since, the Sub UAV member 12 needs extreme power to operate in harsh weather conditions.

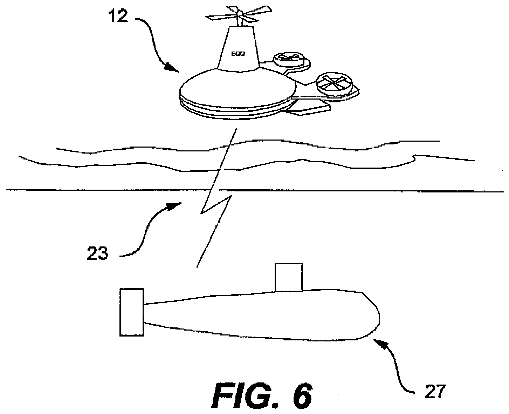

As illustrated in **Figure 2****,** present invention comprises with a system that the Mother UAV member 11 communicates with the Sub UAV member 12, Data Station 21, via satellite 22 to send and receive command signals wherein Mother UAV member 11 and all other Sub UAV members 12 and mini unmanned vehicle members 26 to operate and function, all necessary equipment, electronic components so that all UAV members 11,12, and 26 are able to fly, collect data, store data, transmit data including engage in all the following missions, collect scientific data, monitor change of climate, weather pattern, sea-ice melting, air quality, observe wildlife, ecosystem, marine environment, surveillance, patrolling, securing borders, transport goods, pipeline inspection, observe oil spills, and clean up, Arctic drilling for core ice samples (scientific research), military applications, use as remote ground data collecting stations, combat Arctic wildfires, monitor Oil spills cleanup missions. As illustrated in **Figure 6****,** the Sub UAV member 12 also consists of a method, to land on melting sea-ice and obtain data, from underwater submarines 27 regarding thickness of the ice, melting pattern and sonar ice draft profile data and more. The Data Station member 21 will be fully equipped with latest technology and employed with highly experienced staff and experts who are able to comply on any challengeable mission. Further, the present invention is to provide a remote and satellite communication capability wherein, the Mother UAV member 11 receives and transmits command signals between Data Station 21, between Sub UAV members 12, whereby Mother UAV member 11 and Sub UAV members 12 communicates, operates and functions according to command signals received from each other.

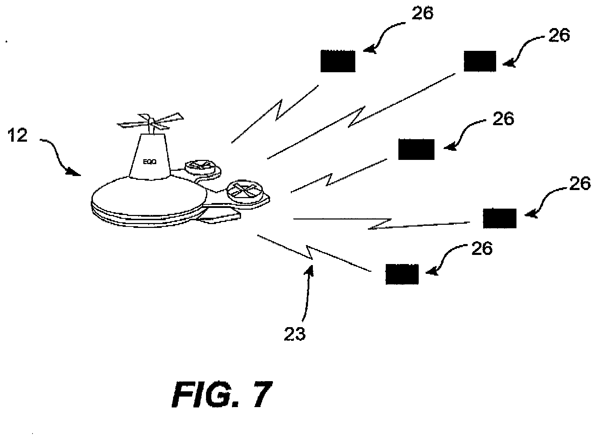

In order not to disturb wildlife in the Arctic region, as illustrated in **Figure 7****,** the Sub UAV member 12, is designed to carry a number of Mini Unmanned Vehicle members 26 that would be deployed in close proximity of wildlife areas, so that these mini vehicles are able to blend with birds, animals or other wildlife. These vehicles will obtain images and necessary information from special cameras and sensors, and transmit the data to the Sub UAV member 12 in-turn the Sub UAV member 12 will transmit collected data to the Data Stations 21 via existing satellites. The Mini Unmanned Vehicle members 26 also comprise with a system to collect plants and wildlife samples and return back to the Sub UAV member 12. It is important to note that this feature is within the scope of the present invention, since interior of the Sub UAV member 12 is designed to carry various substances and mechanical components based on specific missions.

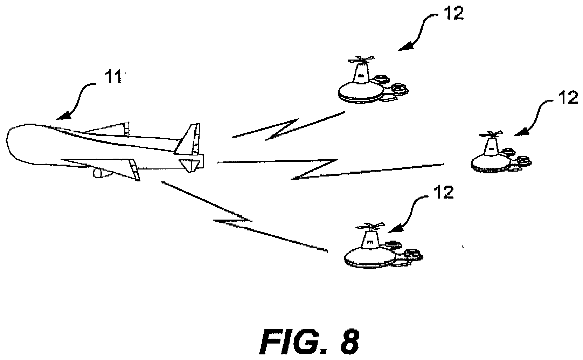

As illustrated in **Fig 8****,** also comprises of a method that the Mother UAV member 11 is capable of controlling Sub UAV members 12 whereby the Sub UAV members 12 are capable of receiving command signals from Mother UAV member 11 and Data Control Station 21 so that the Sub UAV members 12 are able to fly in a sequence and in a coordinated manner alongside the Mother UAV member 11, also capable of maneuvering and performing specific actions.

## Claims

1. A system comprising a flatbed unmanned aerial vehicle carrying multiple sub unmanned aerial vehicles, said system comprising:
- a combination of a mother unmanned aerial vehicle, Mother UAV (11), and multiple autonomous sub unmanned aerial vehicles, called Sub UAVs (12), wherein said multiple Sub UAVs (12) are carried on a flatbed area member (14) of the Mother UAV (11),
wherein said flatbed area member (14) consists of a narrow front member and a wider back section member (17) designed to create the necessary space to carry various sizes of said multiple Sub UAVs (12), and to provide sufficient space to the multiple Sub UAVs (12) to maneuver, eject and land on the flatbed area member (14), and
wherein the Mother UAV (11) is provided with a mechanical locking system wherein when each Sub UAV (12) is loaded or lands on the flatbed area member (14) of the Mother UAV (11), the Sub UAV (12) locks in firmly with said mechanical locking system;
- a deploying mechanism adapted to eject the multiple Sub UAVs (12) from the Mother UAV (11) in mid air;
- a recovering mechanism adapted to receive said multiple Sub UAVs (12) back on the flatbed area member (14) of the Mother UAV (11) in mid air;
- an interlink communication system adapted to enable the Mother UAV (11) and the multiple Sub UAVs (12) to communicate with each other via satellite and remote control technology to send and receive at least one, or number of command signals, communication signals, and to communicate with moveable and un-moveable data stations.

2. The system of claim 1, wherein the Mother UAV (11) is adapted to enable the multiple Sub UAVs (12) to take control and fly autonomously, when the multiple Sub UAVs (12) are ejected from the Mother UAV (11).

3. The system of claim 1, providing a recovery system that is adapted to enable said multiple Sub UAVs (12) to return back to the flatbed (14) of the Mother UAV (11).

4. The system of claim 1, wherein each Sub UAV (12) is adapted to fly in a sequence and in a coordinated manner alongside the Mother UAV (11)

5. The system of claim 1, wherein the interlink communication system is adapted to enable the Mother UAV (11) to receive and transmit command signals between the multiple Sub UAVs (12), between moveable and un-moveable data stations, and between moveable or un-moveable means, airbase stations, e.g. aircrafts, water base stations, e.g. ships and boats, underwater stations, e.g. underwater vehicles and submarines.

6. The system of any preceding claim, whereby the Mother UAV (11) and the multiple Sub UAVs (12) are adapted to communicate, operate and function according to command signals received from each of the Mother UAV (11), the multiple Sub UAVs (12), and Data stations.

7. The system of claim 5 or 6, wherein said command signals are configured to function and operate all necessary equipment, electronic components so that all UAV members fly at various altitudes, collect data, store data, and transmit said data to specific data stations.

8. The system of claim 1, wherein the Mother UAV (11) comprises a high front nose section member (13), a wider back section with the flatbed area member (14), a pair of wings on each side of the Mother UAV (11), at least one set of jet engines mounted on either side of said Mother UAV (11), a pair of horizontal stabilizers and vertical stabilizers that extends from the end of the flatbed area member (14), and multiple wheels at the bottom of the Mother UAV (11).

9. The system of claim 1, wherein each Sub UAV (12) is configured to carry various payloads including liquid payload, cargo payload, mechanical equipment, cameras, sensors, including mini unmanned aerial vehicles (Mini UAVs), wherein preferably at least one of the Sub UAVs (12) is adapted to carry a number of Mini Unmanned Vehicles configured to be deployed in close proximity so that said Mini UAVs are adapted to obtain images and necessary information from special cameras and sensors, wherein preferably each Sub UAV (12) comprises an inner structure with various configurations to accommodate broad range of missions and an external structure that remains unchanged in the various configurations, wherein preferably each Sub UAV (12) comprises special padded interior walls to maintain appropriate temperature to protect instruments and equipment from extreme cold or hot weather.

10. The system of claim 9, wherein at least one of the Sub UAVs (12) comprises:
a rotor system (24) similar to a helicopter, and at least one hover fan (25) positioned on the at least one of the Sub UAVs (12), wherein preferably
the at least one hover fan (25) is configured to operate in various directions, turns and angles, and straight up at a 90 degree upright position, wherein preferably
when the at least one of the Sub UAV (12) lands on a surface, the at least one hover fan (25) is adapted to turn upright and provide power to move the at least one of the Sub UAV (12) from one location to another, wherein preferably
the underside of the at least one of the Sub UAV (12) comprises an interchangeable mechanism adapted to modify the landing capability of the at least one of the Sub UAV (12) system for specific needs, e.g. ski-equipped landing gear to land on ice, hover flotation system to land on water, and wheels to land on the ground.
when the at least one of the

11. The system of any preceding claim, wherein the Mother UAV (11) comprises necessary electronic and mechanical components, software and other required components and devices that provide the function and communication with the multiple Sub UAVs (12).

12. The system of claim 1, wherein the mechanical locking system is adapted to be adjusted and fitted to carry one Sub UAV (12) or multiple Sub UAVs (12), and various size of Sub UAVs (12), wherein preferably, when the Sub UAVs (12) are ready to be ejected, the mechanical locking system is adapted to unlock the Sub UAVs (12) systematically.

13. The system of claim 1, wherein the Sub UAVs (12) are powered by solar power, battery power and fuel.

## Patentansprüche

1. System, umfassend ein unbemanntes Flachbett-Luftfahrzeug, welches mehrere unbemannte Unter-Luftfahrzeuge trägt, wobei das System umfasst:
- eine Kombination eines unbemannten Mutter-Luftfahrzeugs, Mutter-UAV (11), und mehrerer autonomer unbemannter Unter-Luftfahrzeuge, genannt Unter-UAVs (12), wobei die mehreren Unter-UAVs (12) an einem Flachbett-Bereichselement (14) des Mutter-UAV (11) getragen sind,
- wobei das Flachbett-Bereichselement (14) aus einem schmalen vorderen Element und einem breiteren Hinterabschnitt-Element (17) besteht, welches dazu ausgelegt ist, den notwendigen Raum zum Tragen von unterschiedlichen Größen der mehreren Unter-UAVs (12) zu schaffen, und einen ausreichenden Raum für die mehreren Unter-UAVs (12) zum Manövrieren, Auswerfen und Landen an dem Flachbett-Bereichselement (14) bereitzustellen, und
wobei das Mutter-UAV (11) mit einem mechanischen Verriegelungssystem bereitgestellt ist, wobei wenn jedes Unter-UAV (12) an dem Flachbett-Bereichselement (14) des Mutter-UAV (11) geladen ist oder landet, das Unter-UAV (12) sich fest mit dem mechanischen Verriegelungssystem verriegelt;
- einen Auslösemechanismus, welcher dazu eingerichtet ist, die mehreren Unter-UAVs (12) von dem Mutter-UAV (11) im Flug auszuwerfen;
- einen Einfangmechanismus, welcher dazu eingerichtet ist, die mehreren Unter-UAVs (12) zurück auf dem Flachbett-Bereichselement (14) des Mutter-UAV (11) im Flug aufzunehmen;
- ein Kopplungs-Kommunikationssystem, welches dazu eingerichtet ist, es dem Mutter-UAV (11) und den mehreren Unter-UAVs (12) zu ermöglichen, miteinander über Satelliten- und Fernsteuerungstechnologie zu kommunizieren, um wenigstens eines oder eine Anzahl von Anweisungssignalen, Kommunikationssignalen zu senden und empfangen, und mit beweglichen und unbeweglichen Datenstationen zu kommunizieren.

2. System nach Anspruch 1, wobei das Mutter-UAV (11) dazu eingerichtet ist, es den mehrere Unter-UAVs (12) zu ermöglichen, die Kontrolle zu übernehmen und autonom zu fliegen, wenn die mehreren Unter-UAVs (12) aus dem Mutter-UAV (11) ausgeworfen werden.

3. System nach Anspruch 1, welches ein Einfangsystem bereitstellt, welches dazu eingerichtet ist, es den mehreren Unter-UAVs (12) zu ermöglichen, zu dem Flachbett (14) des Mutter-UAVs (11) zurückzukehren.

4. System nach Anspruch 1, wobei jedes Unter-UAV (12) dazu eingerichtet ist, in einer Abfolge und in einer koordinierten Weise gemeinsam mit dem Mutter-UAV (11) zu fliegen.

5. System nach Anspruch 1, wobei das Kopplungs-Kommunikationssystem dazu eingerichtet ist, es dem Mutter-UAV (11) zu ermöglichen, Anweisungssignale zwischen den mehreren Unter-UAVs (12), zwischen beweglichen und unbeweglichen Datenstationen und zwischen beweglichen oder unbeweglichen Mitteln, Luftbasisstationen, z.B. Flugzeugen, Wasserbasisstationen, z.B. Schiffen und Booten, Unterwasserstationen, z.B. Unterwasserfahrzeugen und U-Booten zu empfangen und zu übertragen.

6. System nach einem der vorhergehenden Ansprüche, wobei das Mutter-UAV (11) und die mehreren Unter-UAVs (12) dazu eingerichtet sind, gemäß Anweisungssignalen zu kommunizieren, betrieben zu werden und zu arbeiten, welche von jedem aus dem Mutter-UAV (11) den mehreren Unter-UAVs (12) und Datenstationen empfangen werden.

7. System nach Anspruch 5 oder 6, wobei die Anweisungssignale dazu eingerichtet sind, die gesamte notwendige Ausrüstung, elektronische Komponenten zu verarbeiten und zu betreiben, so dass alle UAV-Elemente in unterschiedlichen Höhen fliegen, Daten sammeln, Daten speichern und die Daten zu spezifischen Datenstationen übertragen.

8. System nach Anspruch 1, wobei das Mutter-UAV (11) ein hohes Frontnasen-Abschnittselement (13), einen breiteren Hinterabschnitt mit dem Flachbett-Bereichselement (14), ein Paar von Flügeln an jeder Seite des Mutter-UAV (11), wenigstens einen Satz von Strahltriebwerken, welche an jeder Seite des Mutter-UAV (11) montiert sind, ein Paar von horizontalen Stabilisatoren und vertikalen Stabilisatoren, welches sich von dem Ende des Flachbett-Bereichselement (14) erstreckt, und mehrere Räder an der Unterseite des Mutter-UAV (11) umfasst.

9. System nach Anspruch 1, wobei jedes Unter-UAV (12) dazu eingerichtet ist, unterschiedliche Nutzlasten zu tragen, einschließlich einer flüssigen Nutzlast, einer Fracht-Nutzlast, mechanischer Ausrüstung, Kameras, Sensoren, einschließlich unbemannter Mini-Luftfahrzeuge (Mini-UAVs), wobei vorzugsweise wenigstens eines der Unter-UAVs (12) dazu eingerichtet ist, eine Anzahl von unbemannten Mini-Fahrzeugen zu tragen, welche dazu eingerichtet sind, in großer Nähe ausgeworfen zu werden, so dass die Mini-UAVs dazu eingerichtet sind, Bilder und notwendige Informationen von speziellen Kameras und Sensoren zu erhalten, wobei vorzugsweise jedes Unter-UAV (12) eine innere Struktur mit verschiedenen Konfigurationen umfasst, um einen breiten Bereich von Missionen zu erfüllen, sowie eine externe Struktur, welche in den verschiedenen Konfigurationen unverändert verbleibt, wobei vorzugsweise jedes Unter-UAV (12) speziell gepolsterte Innenwände umfasst, um eine geeignete Temperatur beizubehalten, um Instrumente und Ausrüstung vor extremem kaltem oder heißem Wetter zu schützen.

10. System nach Anspruch 9, wobei wenigstens eines der Unter-UAVs (12) umfasst: ein Rotorsystem (24), welches einem Helikopter ähnlich ist, und wenigstens einen Schwebepropeller (25), welcher an dem wenigstens einen der Unter-UAVs (12) positioniert ist, wobei vorzugsweise der wenigstens eine Schwebepropeller (25) dazu eingerichtet ist, in verschiedenen Richtungen, Kurven und Winkeln und gerade nach oben bis zu einer 90 Grad aufrechten Position betrieben zu werden, wobei vorzugsweise, wenn das wenigstens eine der Unter-UAVs (12) an einer Oberfläche landet, der wenigstens eine Schwebepropeller (25) dazu eingerichtet ist, sich aufrecht zu drehen und Leistung bereitzustellen, um das wenigstens eine der Unter-UAVs (12) von einem Ort zu einem anderen zu bewegen, wobei vorzugsweise die Unterseite des wenigstens einen der Unter-UAVs (12) einen austauschbaren Mechanismus umfasst, welcher dazu eingerichtet ist, die Landefähigkeit des wenigstens einen der Unter-UAVs (12) für spezifische Anforderungen zu modifizieren, z.B. mit Ski ausgerüstete Landeausrüstung zum Landen auf Eis, Schwebeauftrieb-System zum Landen auf Wasser und Räder zum Landen auf dem Erdboden.

11. System nach einem der vorhergehenden Ansprüche, wobei das Mutter-UAV (11) notwendige elektronische und mechanische Komponenten, Software und andere benötigte Komponenten und Vorrichtungen umfasst, welche die Funktion und Kommunikation mit den mehreren Unter-UAVs (12) bereitstellen.

12. System nach Anspruch 1, wobei das mechanische Verrieglungssystem dazu eingerichtet ist, zum Tragen eines Unter-UAV (12) oder mehrerer Unter-UAV (12) und unterschiedlicher Größen von Unter-UAVs (12) abgestimmt und angepasst zu sein, wobei vorzugsweise wenn die Unter-UAVs (12) bereit sind, ausgeworfen zu werden, das mechanische Verriegelungssystem dazu eingerichtet ist, die Unter-UAVs (12) systematisch zu entriegeln.

13. System nach Anspruch 1, wobei die Unter-UAVs (12) durch Solarenergie, Batterieenergie und Treibstoff mit Energie versorgt werden.

## Revendications

1. Système comprenant un véhicule aérien sans pilote à plate-forme portant de multiples sous-véhicules aériens sans pilote, ledit système comprenant :
- une combinaison d'un véhicule aérien sans pilote principal, UAV-mère (11), et de multiples sous-véhicules aériens sans pilote autonomes, sous-UAV (12),
dans lequel lesdits multiples sous-UAV (12) sont portés sur un organe de zone de plate-forme (14) de l'UAV-mère (11),
dans lequel ledit organe de zone de plate-forme (14) se compose d'un organe avant étroit et d'un organe de section arrière plus large (17) conçu pour créer l'espace nécessaire pour porter diverses tailles desdits multiples sous-UAV (12), et pour fournir un espace suffisant aux multiples sous-UAV (12) pour manœuvrer, s'éjecter et atterrir sur l'organe de zone de plate-forme (14), et
dans lequel l'UAV-mère (11) est pourvu d'un système de verrouillage mécanique dans lequel, lorsque chaque sous-UAV (12) est chargé ou atterrit sur l'organe de zone de plate-forme (14) de l'UAV-mère (11), le sous-UAV (12) se verrouille fermement avec ledit système de verrouillage mécanique ;
- un mécanisme de déploiement apte à éjecter les multiples sous-UAV (12) de l'UAV-mère (11) en vol ;
- un mécanisme de récupération apte à recevoir lesdits multiples sous-UAV (12) de retour sur l'organe de zone de plate-forme (14) de l'UAV-mère (11) en vol ;
- un système de communication d'interconnexion apte à permettre à l'UAV-mère (11) et aux multiples sous-UAV (12) de communiquer les uns avec les autres par l'intermédiaire d'une technologie satellitaire et de télécommande pour envoyer et recevoir au moins un ou un nombre de signaux de commande, de signaux de communication, et pour communiquer avec des stations de données mobiles et immobiles.

2. Système selon la revendication 1, dans lequel l'UAV-mère (11) est apte à permettre aux multiples sous-UAV (12) de prendre le contrôle et de voler de manière autonome lorsque les multiples sous-UAV (12) sont éjectés de l'UAV-mère (11).

3. Système selon la revendication 1, fournissant un système de récupération qui est apte à permettre aux dits multiples sous-UAV (12) de revenir sur la plate-forme (14) de l'UAV-mère (11).

4. Système selon la revendication 1, dans lequel chaque sous-UAV (12) est apte à voler dans une séquence et d'une manière coordonnée à côté de l'UAV-mère (11).

5. Système selon la revendication 1, dans lequel le système de communication d'interconnexion est apte à permettre à l'UAV-mère (11) de recevoir et de transmettre des signaux de commande entre les multiples sous-UAV (12), entre des stations de données mobiles et immobiles, et entre des moyens mobiles ou immobiles, des stations de bases aériennes, par exemple des aéronefs, des stations de bases maritimes, par exemple des navires et des bateaux, et des stations sous-marines, par exemple des véhicules sous-marins et des sous-marins.

6. Système selon l'une quelconque des revendications précédentes, dans lequel l'UAV-mère (11) et les multiples sous-UAV (12) sont aptes à communiquer, opérer et fonctionner selon des signaux de commandes reçus en provenance de chacun de l'UAV-mère (11), des multiples sous-UAV (12), et de stations de données.

7. Système selon la revendication 5 ou 6, dans lequel lesdits signaux de commande sont configurés pour faire fonctionner et opérer tous les équipements, composants électroniques nécessaires de sorte que tous les organes UAV volent à diverses altitudes, recueillent des données, mémorisent des données et transmettent lesdites données à des stations de données spécifiques.

8. Système selon la revendication 1, dans lequel l'UAV-mère (11) comprend un organe de section de nez avant haut (13), une section arrière plus large avec l'organe de zone de plate-forme (14), une paire d'ailes de chaque côté de l'UAV-mère (11), au moins un ensemble de moteurs à réaction montés de chaque côté dudit UAV-mère (11), une paire de stabilisateurs horizontaux et de stabilisateurs verticaux qui s'étendent depuis l'extrémité de l'organe de zone de plate-forme (14) et de multiples roues au bas de l'UAV-mère (11).

9. Système selon la revendication 1, dans lequel chaque sous-UAV (12) est configuré pour porter diverses charges utiles incluant une charge utile liquide, une charge utile de cargaison, des équipements mécaniques, des caméras, des capteurs, incluant des mini véhicules aériens sans pilote (mini UAV), dans lequel de préférence au moins l'un des sous-UAV (12) est apte à porter un nombre de mini véhicules sans pilote configurés pour être déployés à proximité étroite de sorte que lesdits mini UAV soient aptes à obtenir des images et informations nécessaires depuis des caméras et capteurs spéciaux, dans lequel de préférence chaque sous-UAV (12) comprend une structure intérieure avec diverses configurations pour prendre en charge un grand éventail de missions et une structure externe qui reste inchangée dans les diverses configurations,
dans lequel de préférence chaque sous-UAV (12) comprend des parois intérieures rembourrées spéciales pour maintenir une température appropriée afin de protéger des instruments et équipements de conditions météorologiques extrêmement froides ou chaudes.

10. Système selon la revendication 9, dans lequel au moins l'un des sous-UAV (12) comprend :
un système de rotor (24) similaire à un hélicoptère, et
au moins une turbine soufflante de vol stationnaire (25) positionnée sur l'au moins un des sous-UAV (12),
dans lequel de préférence l'au moins une turbine soufflante de vol stationnaire (25) est configurée pour être opérée dans divers sens, tours et angles et tout droit à une position verticale à 90 degrés, dans lequel de préférence, lorsque l'au moins un des sous-UAV (12) atterrit sur une surface, l'au moins une turbine soufflante de vol stationnaire (25) est apte à tourner verticalement et à fournir une force motrice pour déplacer l'au moins un des sous-UAV (12) d'un emplacement à un autre, dans lequel de préférence le dessous de l'au moins un des sous-UAV (12) comprend un mécanisme interchangeable apte à modifier la capacité d'atterrissage de l'au moins un des sous-UAV (12) pour des besoins spécifiques, par exemple un train d'atterrissage sur skis permettant d'atterrir sur la glace, un système de flottaison stationnaire pour amerrir, et des roues pour atterrir au sol.

11. Système selon l'une quelconque des revendications précédentes, dans lequel l'UAV-mère (11) comprend des composants électroniques et mécaniques nécessaires, des logiciels et d'autres composants et dispositifs nécessaires qui permettent de fonctionner et de communiquer avec les multiples sous-UAV (12).

12. Système selon la revendication 1, dans lequel le système de verrouillage mécanique est apte à être ajusté et adapté pour porter un sous-UAV (12) ou plusieurs sous-UAV (12), et diverses tailles de sous-UAV (12), dans lequel de préférence, lorsque les sous-UAV (12) sont prêts à être éjectés, le système de verrouillage mécanique est apte à déverrouiller systématiquement les sous-UAV (12).

13. Système selon la revendication 1, dans lequel les sous-UAV (12) sont alimentés par l'énergie solaire, l'énergie de batterie et du carburant.
